# EUROPÄISCHE PATENTSCHRIFT

(11) **EP 3 590 667 B1**
(45) Veröffentlichungstag und Bekanntmachung des Hinweises auf die Patenterteilung: **19.04.2023**
(21) Anmeldenummer: 18182019.2
(22) Anmeldetag: 05.07.2018
(51) Int. Cl.: B25J 19/00, B08B 3/02, B08B 15/02, A47J 27/00, B08B 17/02

(54) **GASTRONOMIEKÜCHE MIT EINEM KÜCHENROBOTER UND EINEM REINIGUNGSSYSTEM FÜR DIESEN ROBOTER SOWIE REINIGUNGSVERFAHREN ZUM REINIGEN DIESES ROBOTERS**
CATERING KITCHEN WITH A KITCHEN ROBOT AND A CLEANING SYSTEM FOR THIS ROBOT AND CLEANING METHOD FOR CLEANING THIS ROBOT
CUISINE GASTRONOMIQUE AVEC ROBOT CUISINIER ET SYSTÈME DE NETTOYAGE DE CE ROBOT AINSI QUE PROCÉDÉ DE NETTOYAGE DE CE ROBOT

(43) Veröffentlichungstag der Anmeldung: 08.01.2020
(73) Patentinhaber: IPR-Intelligente Peripherien für Roboter GmbH, 75031 Eppingen (DE)
(72) Erfinder: Doll, Fredy, 77855 Achern (DE); Kollmar, Thomas, 74223 Flein (DE)
(74) Vertreter: Witte, Weller und Partner Patentanwälte mbB Stuttgart

(56) Entgegenhaltungen:
- EP-A1- 2 542 388
- EP-A1- 2 929 989
- WO-A1-2017/220105
- DE-A1- 4 129 778
- JP-A- 2005 098 662
- JP-U- H0 163 483
- US-A1- 2005 193 901
- US-A1- 2017 188 744
- NATIONAL AERONAUTICS AND SPACE ADMINISTRATION, MARSHALL SPACE FLIGHT CENTER: "PORTABLE WATER-SAVING SHOWER FOR EMERGENCIES", NTIS TECH NOTES, US DEPARTMENT OF COMMERCE. SPRINGFIELD, VA, US, 1. März 1992 (1992-03-01), Seite 173, XP000291027, ISSN: 0889-8464

## Beschreibung

Die Erfindung betrifft den Bereich der Küchenrobotersysteme und deren Reinigung.

Unter einem Küchenroboter im Sinne der Erfindung wird ein System mit in der Küche an fester Position oder mittels eines Schienensystems verfahrbarem Küchenroboter bezeichnet, wobei der Küchenroboter über einen in sich beweglichen Roboterarm verfügt, mittels dessen Küchenwerkzeuge gehandhabt werden können. Solche Küchenroboter sind derzeit noch nicht sehr verbreitet. Es ist allerdings absehbar, dass insbesondere für mechanisch einfache Tätigkeiten im Küchenbereich eine regelmäßige Verwendung in der Gastronomie zu erwarten ist. Insbesondere im Bereich der Systemgastronomie mit vergleichsweise einfachen Gerichten und sich häufig wiederholenden Arbeitsschritten bietet sich die Verwendung solcher Küchenroboter an. Eine hier beispielhaft zu nennende Tätigkeit ist das Zubereiten und Wenden von Burgerfleisch.

Ein Problem, welches der Verwendung von Robotern im Bereich der Gastronomie noch entgegensteht, ist der Reinigungsaufwand. Während die meisten üblicherweise verwendeten Küchenwerkzeuge üblicherweise nach Verwendung in einer Spülmaschine gereinigt werden können und größere Gerätschaften bislang üblicherweise mit feuchten Lappen gereinigt oder abgewischt werden, sind Roboter und deren Roboterarme üblicherweise weder ausreichend leicht, um in eine übliche Gastronomie-Spülmaschine zu passen, noch sind sie aufgrund ihrer häufig komplexen Außenformen bereits mit einem Lappen in kurzer Zeit ausreichend zu reinigen.

Aus der US 2005/193901 A1 ist eine automatisierte Küche mit einem Küchenroboter und einem Reinigungssystem bekannt. Mit einer vom Roboter getragenen Austragsdüse kann sich der Roboter selbst reinigen.

In der WO 2011/107137 A1 ist die Verwendung von Industrierobotern im Zuge der Erdölverarbeitung beschrieben. In diesem Zusammenhang ist auch die Reinigung dieser Roboter in einer Box mit Vorhang vorgeschlagen.

Aus der DE 4129778 A1 ist eine Vorrichtung bekannt, um maschinengeführte Sprühorgane, Zuleitungsschläuche und Arbeitsarme an Lackierautomaten, insbesondere an Lackierrobotern, zu reinigen.

Aus der JP 2005098662 A ist eine Art Reinigungssack bekannt, der über eine zu reinigende Einrichtung gesetzt wird, um diese zu reinigen.

Aus der JP H01-63483 U ist eine Reinigungszelle zur Körperreinigung bekannt. Auch aus dem Artikel "Portable water-saving shower for emergencies" der NASA, NDIS Tech Notes, US Department of Commerce, 1. März 1992 (1992-03-01), Seite 173 (XP000291027, ISSN: 0889-8464) ist eine Reinigungseinrichtung für Menschen bekannt, wobei diese dem Zweck dient, Menschen nach Kontamination reinigen zu können.

### AUFGABE UND LÖSUNG

Aufgabe der Erfindung ist es, eine Gastronomieküche zur Verfügung zu stellen, die eine erleichterte Reinigung von Küchenrobotern in der Gastronomieküche gestattet.

Erfindungsgemäß wird dies primär durch eine Gastronomieküche gemäß Anspruch 1 erzielt.

Die erfindungsgemäße Gastronomieküche weist mindestens einen Zubereitungsplatz oder Verarbeitungsplatz auf, an welchem ein Küchenrobotersystem mit Reinigungssystem vorgesehen ist. Der Zubereitungsplatz oder Verarbeitungsplatz kann zur Verwendung wahlweise durch den Küchenroboter oder einen Menschen ausgebildet sein oder alleine der Verwendung durch den Küchenroboter dienen.

Der Küchenroboter weist mindestens einen Roboterarm auf, der über eine Mehrzahl von Gliedern verfügt, die jeweils über Gelenke oder Führungen aneinander angebunden und gegeneinander beweglich sind.

Das in der erfindungsgemäßen Gastronomieküche vorgesehene Reinigungssystem bildet einen Reinigungsraum zur zumindest abschnittsweisen Aufnahme des Küchenroboters. Dabei ist dieser Reinigungsraum zumindest abschnittsweise durch eine formflexible Wandung des Reinigungssystems begrenzt, so dass der Reinigungsraum hierdurch gegenüber der Umgebung der Küche isoliert ist. Zur Anwendung in dem isolierten Reinigungsraum verfügt das Reinigungssystem über ein Ausbringungssystem für ein Reinigungsmedium, welches über mindestens eine Austragdüse verfügt, mittels derer das Reinigungsmedium in den isolierten Reinigungsraum eingebracht werden kann.

Die erfindungsgemäß vorgesehene Bildung des Reinigungsraums durch eine formflexible Wandung hat sich als besonders schneller und unaufwändiger Weg zur Isolation des Roboters herausgestellt. Entsprechende Wandungen, die den Roboter in Art eines Vorhangs oder einer Umhüllung isolieren, sind bei Nichtbenutzung platzsparend aufzubewahren, können gut von einer Person alleine gehandhabt werden und sind preisgünstig in der Herstellung.

Auf eine vollständige Isolation des Reinigungsraums kommt es üblicherweise nicht an. Nur bei Verwendung von gesundheitlich problematischen Reinigungsmedien kommt der Isolation eine besondere Bedeutung zu. Bei Verwendung unkritischer Reinigungsmedien hingegen reicht eine gröbere Isolation aus, die nur geringe Mengen des Reinigungsmediums entweichen lässt.

Das Reinigungsmedium ist üblicherweise eine Flüssigkeit, die insbesondere durch einen fettlösenden Bestandteil die Verschmutzungen auflösen kann und die zusätzlich oder alternativ durch eine antibakterielle Wirkung Bakterienwachstum verhindern kann. Es können auch gleichzeitig oder nacheinander mehrere Reinigungsmedien Verwendung finden, wenn das Ausbringungssystem hierfür ausgebildet ist.

Das Reinigungsmedium wird bestimmungsgemäß in den durch die formflexible Wandung gebildeten oder geschlossenen Reinigungsraum eingebracht, um sich auf dem Roboterarm oder dessen Teilen niederzuschlagen und/oder von hier aufgrund des Flüssigkeitsdrucks Verschmutzungen abzulösen.

Bevorzugt werden zwei verschiedene Bauweisen der formflexiblen Wandung, nämlich zum einen eine Bauweise mit einem Reinigungsschlauch, der in Art einer Umhüllung zumindest abschnittsweise den Küchenroboter oder dessen Roboterarm umlaufend umgibt, und andererseits eine Bauweise mit einer Isolationsplane, die angebracht an Wandungen eines Küchengeräts, anderer Wandungen der Küche oder einem hierfür vorgesehenen Gestell vorhangartig herunterhängt und insbesondere vorzugsweise mit weiteren Wandungen eines Küchengeräts oder der Küche zusammen den isolierten Reinigungsraum begrenzt.

Bei der ersten bevorzugten Bauweise mit Reinigungsschlauch umgibt dieser Reinigungsschlauch den Roboter zumindest abschnittsweise. Der umgebene Raum bildet den Reinigungsraum oder einen Teil hiervon. Der Reinigungsschlauch verfügt über mindestens ein offenes Ende, so dass er mindestens über den Greifer oder den Roboterarm des Küchenroboters oder über den gesamten Küchenroboter gezogen werden kann und diesen Greifer oder Roboterarm oder den gesamten Küchenroboter damit von einer Umgebung isolieren kann.

Der Reinigungsschlauch hat also zumindest eine Öffnung oder offene Seite, um mittels derer über den Roboterarm hinübergezogen zu werden. Vorzugsweise ist der Reinigungsschlauch mit Ausnahme von Flüssigkeitszuführungen oder Abführungen im Übrigen geschlossen. Bei fester Anbringung an einem Roboter kann aber auch ein beidseitig offener Schlauch von Vorteil sein, dessen eines offenes Ende dauerhaft am Roboter befestigt ist.

Der Reinigungsschlauch hat vorzugsweise eine längliche Form entsprechend der Längserstreckung eines Roboterarms. Auf diese Form kommt es allerdings nicht an. Auch ein eher sackartiger Hüllenkörper, der den Roboterarm umgeben kann, wird als Reinigungsschlauch im Sinne der Erfindung verstanden. Dennoch ist es von Vorteil, wenn das Innenvolumen des Schlauchs zumindest grob an den zu umhüllenden Roboterarm angepasst ist. So wird es als vorteilhaft angesehen, wenn das durch die Außenkontur des Roboterarms definierte Volumen desselben mindestens 5%, insbesondere mindestens 10%, des Maximalvolumens des Reinigungsschlauchs einnimmt.

Der Reinigungsschlauch besteht vorzugweise aus PVC oder einem anderen verformbaren Kunststoff. Insbesondere vorzugweise ist der Schlauch durch eine Strukturierung seiner Wandungen mit partiellen Verstärkungen und/oder Schwächungen, insbesondere in Art eines Balges, in begrenztem Maße eigensteif. Hierdurch wird ein für die Reinigung ungewünschtes Anlegen der Wandungen unmittelbar auf Oberflächen des Roboterarms erschwert.

Bei einer Gestaltung mit Reinigungsschlauch ist vorzugsweise am mindestens einen offenen Ende eine Dichtungseinrichtung vorgesehen. Diese umfasst vorzugsweise eine umlaufende Dichtfläche, welche beispielsweise nach innen oder in Richtung des Endes weisend ausgebildet sein kann. Die Dichtfläche ist vorzugsweise verformbar oder gar elastisch tangential dehnbar und dafür vorgesehen, an einer Gegenfläche des Küchenroboters abzuliegen.

Wie oben bereits erwähnt, kommt es nur in Ausnahmefällen auf eine vollständig flüssigkeitsdichte Isolation der Reinigungskammer gegenüber der Umgebung an. Dennoch ist insbesondere die genannte tangentiale Dehnbarkeit sehr vorteilhaft, da sie es auf einfache Weise gestattet, ein vergleichsweise hohes Maß an Dichtigkeit dadurch zu erzielen, dass die dehnbare Dichtfläche sich in Art eines Gummizuges flexibel an Oberflächen des Roboterarms anlegen kann.

Bei der genannten zweiten bevorzugten Bauweise, die ähnlich eines Vorhangs geartet ist, weist das Reinigungssystem eine verformbare Isolationsplane auf, die die formflexible Wandung zumindest teilweise bildet. Diese Isolationsplane ist vorzugsweise zur Befestigung an einer Wandung innerhalb der Küche vorgesehen und bildet zusammen mit Wandungen der Küche oder des Küchengeräts den Reinigungsraum, der zum Zwecke der Reinigung des Roboters gegenüber der Umgebung isoliert wird.

Bei dieser zweiten Variante werden somit vorzugsweise Wandungen des Arbeitsplatzes des Roboters durch ohnehin vorhandene Strukturen gebildet und die formflexible Wandung schließt gemeinsam mit diesen den Reinigungsraum, in dem der Roboter montiert ist, ein. Die Wandung kann dabei wie ein Vorhang zu Boden oder in Richtung einer anderen Küchenoberfläche hängen oder mit seinem Ende auf dieser aufliegen.

Die Isolationsplane ist vorzugsweise zur lösbaren Befestigung an einer starren Wandung ausgebildet, insbesondere durch ein magnetisch wirkendes Befestigungssystem. Dies gestattet es auf einfache Weise, die Isolationsplane schnell anzubringen, um den Reinigungsraum zu schaffen.

Das eingangs genannte Ausbringungssystem eines Reinigungssystems einer erfindungsgemäßen Gastronomieküche ist zu Einbringung von Reinigungsflüssigkeit in den gegenüber der Umgebung isolierten Reinigungsraum vorgesehen. Es umfasst insbesondere einen Tank für vorgehaltene Reinigungsflüssigkeit, eine Fördereinrichtung wie eine Pumpe, sowie Kanäle, die den Tank und die Fördereinrichtung mit der Austragdüse verbinden. Die Austragdüse ist in den Reinigungsraum gerichtet, so dass die hierdurch ausgetragenen Flüssigkeit in den Reinigungsraum gelangt und dort auf die zu reinigen Oberflächen trifft bzw. sich auf diesen niederschlägt.

Eine mögliche Bauweise sieht vor, dass die mindestens eine Austragdüse in die formflexible Wandung des Reinigungssystems integriert ist. Dies bedeutet, dass jenes Bauteil, welches auch die formflexible Wandung umfasst, die mindestens eine Düse in Position hält. Dies führt zu einer recht praktische Bauweise des Reinigungssystems, da das Ausbringungssystem oder seine Austragdüse durch die formflexible Wandung bereits positioniert wird. Die Reinigung kann daher direkt nach Anbringen der Wandung beginnen.

Eine alternative Anordnung der mindestens einen Austragdüse, die im Falle mehrerer Austragdüsen auch mit der genannten Gestaltung mit Austragdüse in der formflexiblen Wandung gemäß obiger Beschreibung kombiniert sein kann, sieht vor, dass die Austragdüse ortsfest am Küchenroboter oder im Bereich des Küchenroboters an einer Wandung befestigt ist. Eine solche Bauweise bietet sich insbesondere an, wenn zumindest Teile des Ausbringungssystems und insbesondere die Austragdüse zum fest installierten Verbleib an Ort und Stelle vorgesehen sind.

Insbesondere kann die Austragdüse an einem beweglichen Glied des Roboterarms vorgesehen sein. Damit ist die Austragdüse einerseits in unmittelbarer Nähe zu den zu reinigenden Oberflächen des Roboterarms. Andererseits gestattet es diese Anordnung der Reinigungsdüse auch, diese zur Reinigung umliegender Flächen zu verwenden, indem der Roboterarm hierfür entlang dieser Flächen bewegt wird, während Reinigungsmedium ausgetragen wird.

Baulich ist es bei einer solchen Gestaltung von besonderem Vorteil, wenn eine Zuleitung zur Austragdüse im Roboterarm fest integriert ist, so dass externe Schläuche vermieden werden, die weitere schwer zu reinigenden Stellen verursachen könnten.

Über die genannte Austragdüse wird das flüssige Reinigungsmedium in den Reinigungsraum eingebracht, vorzugsweise in Form eines Jets, eines Sprühstrahls oder eines Nebels. Je nach gewünschter Austragcharakteristik ist eine passende Austragdüse zu wählen, insbesondere eine Einstoff-Düse oder Zweistoff-Düse.

Zusätzlich zum genannten Reinigungsmedium kann das Ausbringungssystem auch dafür ausgelegt sein, eine weitere Flüssigkeit in den Reinigungsraum einzubringen, wobei es sich insbesondere um ein zweites Reinigungsmedium handeln kann, welches gleichzeitig, vor oder nach dem ersten Reinigungsmedium eingebracht wird. Insbesondere kann jedoch die weitere Flüssigkeit auch eine Spülflüssigkeit, insbesondere Wasser sein, mittels derer das erste Reinigungsmedium von den Oberflächen entfernt wird.

Bei einem Reinigungssystem, welches in der beschriebenen Weise für mehrere Medien oder Flüssigkeiten vorgesehen ist, können insbesondere mehrere Flüssigkeitsspeicher zur Lagerung und/oder mehrere Austragdüsen zur Ausbringung vorgesehen sein. Denkbar sind auch Gestaltungen, bei denen einige Komponenten wie Austragdüse und/oder Pumpe zum Austrag beider Flüssigkeiten/Medien dienen.

Wie eingangs bereits erläutert worden ist, wird insbesondere der Austrag des Reinigungsmediums in Form eines Nebels bevorzugt. Hierunter wird ein Aerosol mit einer mittlere Tröpfchengröße des Reinigungsmediums < 50 µm verstanden. Der Nebel setzt sich zuverlässig auf allen Oberflächen ab, die der Reinigung bedürfen und kommt dabei auch an schwer zugängliche Oberflächen, die mit einem Sprühstrahl oder Jetschwerer oder kaum erreichbarsind.

Von besonderem Vorteil ist es bei der Einbringung von Nebel aus Reinigungsmedium, wenn dieses nach Einbringung im Reinigungsraum bewegt wird. Von besonderem Vorteil ist daher eine Ausgestaltung des Reinigungssystems, bei der das Ausbringungssystem über mehrere voneinander beabstandete Austragdüsen verfügt. Mindestens eine der Austragdüsen ist zur Erzeugung des Nebels ausgebildet. Die mindestens eine weitere Austragdüse ist derart angeordnet oder ausgebildet, dass sie durch Austrag von Gas oder Nebel die Ausbreitung des Nebels der ersten Austragdüse beeinflussen kann. Diese weitere Austragdüse kann somit ebenfalls eine Düse zur Einbringung von Nebel sein. Es kann sich jedoch insbesondere auch um eine Austragdüse handeln, mittels derer Luft oder ein anderes Gas in den Reinigungsraum geleitet wird, um die dort bereits befindliche Nebelwolke in Bewegung zu versetzen. Auch mehrere weitere Düsen, die Unterdruck und/oder Überdruck erzeugen können, können vorgesehen sein.

Die Bewegung des Nebels im Reinigungsraum begünstigt den Niederschlag auf den Oberflächen des Küchenroboters. Insbesondere bei komplexen Außenkonturen des Küchenroboters bzw. seines Roboterarms wird durch die Bewegung des Nebels die Reinigungswirkung deutlich verbessert.

Die Entfernung der in den Reinigungsraum eingebrachte Reinigungsmedien oder der Spülflüssigkeit kann im einfachsten Falle erfolgen, indem der Reinigungsraum geöffnet wird oder die formflexible Wandung entfernt wird und anschließend mit einem Lappen oder dergleichen die Flüssigkeit aufgenommen wird.

Alternativ oder zusätzlich sind jedoch auch andere Wege zur Entfernung der Flüssigkeit möglich. Im Falle eines mit einem Abfluss versehenen Standortes, an dem der Küchenroboter aufgestellt ist, kann dieser genutzt werden, um das Reinigungsmedium und/oder die Spülflüssigkeit aufzunehmen.

Insbesondere im Falle einer Reinigung mit einem Reinigungsmedium in vernebelter Form ist es von Vorteil, wenn das Reinigungssystem ein Absaugungssystem zur Entfernung von flüssigen und/oder in Nebelform vorliegenden Flüssigkeitsresten des Reinigungsmediums und/oder der Spülflüssigkeit umfasst. Ein solches Absaugsystem weist eine Ansaugöffnung auf, an der ein Unterdruck anliegt, mittels dessen der Nebel aus dem Reinigungsraum abgesaugt werden kann.

Das beschriebene Reinigungssystem umfasst, wie zuvor dargelegt, die Ausbringungseinrichtung für das Reinigungsmedium sowie den flexiblen Flächenabschnitt, mittels dessen der Reinigungsraum gegenüber einer Umgebung abgeschlossen ist. Da es primär darum geht, den Küchenroboter bzw. dessen Roboterarm am Verwendungsort zu reinigen, stimmt dieser Reinigungsraum mit dem Aufstellungsort des Küchenroboters überein. Allerdings muss der Reinigungsraum nicht vollständig von Teilen des vorzugsweise zumindest zum Teil mobilen Reinigungssystems umgeben sein. Stattdessen können Wandungen des Arbeitsplatzes des Küchenroboters zur Herstellung der genannten Isolation herangezogen werden.

Das beschriebene Reinigungssystem kann grundsätzlich für verschiedene Robotertypen geeignet sein. So kann im Falle des oben beschriebenen Systems mit Reinigungsschlauch dieser Schlauch ausreichend dimensioniert sein, um sowohl kleinere als auch größere Roboterarme unter Bildung des Reinigungsraums zu umhüllen. Von Vorteil ist jedoch eine Anpassung des Reinigungssystems an einen bestimmten Robotertyp, da eine solche Anpassung Erleichterungen in der Handhabung ermöglicht und da Teile des Reinigungssystems auch unmittelbar in den Küchenroboter integriert sein können.

Als Küchenroboter kommt insbesondere ein Roboter mit einem Roboterarm in Frage, der mindestens als 4-Achs-Roboterarm und vorzugsweise als 6-Achs-Roboterarm ausgebildet ist.

Die durch die formflexible Wandung, insbesondere in Form eines Reinigungsschlauchs, zumindest teilweise begrenzte Reinigungskammer ist vorzugsweise an die Formgebung und Größe des Roboters oder Roboterarms angepasst.

Der Küchenroboter ist insbesondere zur stationären Anordnung ausgebildet und daher fest auf einer Arbeitsfläche oder in einem Bereich vor der Arbeitsfläche befestigt, insbesondere mit einem Podest oder Sockel verschraubt.

Das Reinigungssystem ist vorzugsweise zumindest teilweise zur fallweisen Anbringung am Küchenroboter ausgebildet. Dies betrifft insbesondere den Teil umfassend die formflexible Wandung, welcher bei Nichtbenutzung an anderem Ort verstaut sein kann. Auch das Ausbringungssystem kann als mobiles Ausbringungssystem vorgesehen sein, welches zum Zwecke der Reinigung der Küche installiert wird.

Andere Teile des Reinigungssystems oder auch das Reinigungssystems als Ganzes kann jedoch zum festen Verbleib am Küchenroboter ausgebildet sein. Dies betrifft insbesondere das Ausbringungssystem und dessen Austragdüse. Die Austragdüse kann im Bereich des Roboters fest im Reinigungsraum installiert sein oder insbesondere fest am Roboterarm vorgesehen sein. Eine solche Anbringung der Austragdüse vereinfacht zum einen die Handhabung des Reinigungssystems, da während der Inbetriebnahme kein Umgang mit Schlauchleitungen oder dergleichen erforderlich ist. Zudem gestattet es je nach Art der Anordnung der Austragdüse am Roboterarm, dass diese mittels der gegebenen Beweglichkeit des Roboterarms während des Austrags des Reinigungsmediums bewegt wird. So ist es möglich, nicht nur den Roboterarm selbst mit der Reinigungsflüssigkeit zu beaufschlagen, sondern auch umgebende Oberflächen gezielt miteinzubeziehen.

Auch die Zuleitung zur Austragdüse, insbesondere in Form eines Schlauchs, ist bei einer bevorzugten Gestaltung fest am oder im Roboterarm vorgesehen. Dabei ist insbesondere eine Gestaltung von Vorteil, bei der die Zuleitung innerhalb des Roboterarms vorgesehen ist, da hierdurch komplexe, zu reinigende Geometrien im Bereich der Zuleitung vermieden werden.

Die feste Installation am Küchenroboter oder im Bereich des Küchenroboters kann auch in Hinblick auf die formflexible Wandung vorgesehen sein. So kann die genannte Schlauchform durch einen längenveränderlichen Schlauch ermöglichen, dass dieser Schlauch in einem Betriebszustand des Roboters gestaucht am Roboter verbleibt und zum Zwecke der Reinigung ausgezogen wird, so dass er den Roboterarm vollständig oder nahezu vollständig umgibt. Im Falle einer Gestaltung des Reinigungssystems mit einer verformbaren Isolationsplane ist es möglich, diese bei Nichtgebrauch in einem aufgerollten Stauzustand ähnlich einem Rollo zu lagern und zum Zwecke der Reinigung von hier abzuwickeln.

Die Erfindung betrifft darüber hinaus auch das Verfahren zum Reinigen eines in der Gastronomie eingesetzten Küchenroboters der beschriebenen Art mit einem Reinigungssystem der beschriebenen Art. Das Verfahren betrifft dabei die mindestens zwei Schritte, dass zunächst der Roboterarm oder ein Greifer des Küchenroboters oder der gesamte Küchenroboter in dem Reinigungsraum gegenüber einer Küchenumgebung isoliert wird. Nachdem diese Isolation erfolgt ist, wird mittels der mindestens einer Austragdüse das Reinigungsmedium in den Reinigungsraum eingebracht und damit auf Oberflächen des Greifers, des Roboterarms oder des Küchenroboters aufgebracht.

Das Verfahren sieht also vor, dass ein den Roboterarm umgebender Isolationsraum geschaffen wird, der zumindest im Wesentlichen verhindert, dass anschließend eingebrachtes Reinigungsmedium in den übrigen Küchenraum gelangt. Der isolierte Reinigungsraum wird dabei an jenem Ort geschaffen, an dem der Roboter auch im normalen Küchenbetrieb arbeitet. Der Isolationsraum ist zumindest zum Teil und bei einigen Gestaltungen zum überwiegenden Teil von der formflexiblen Wandung umgeben, die je nach Ausgestaltung den Reinigungsraum umhüllen oder gemeinsam mit festen Wandungen der Küche begrenzen. In den somit geschaffenen temporären Reinigungsraum wird dann zumindest Reinigungsflüssigkeit eingebracht, vorzugsweise aber nicht zwingend in vernebelter Form.

Die Verweildauer des Roboters, des Roboterarms oder des daran angebrachten Greifers im Reinigungsraum kann je nach Ausgestaltung des Verfahrens kurz sein (<10 Minuten). Dies ist insbesondere dann zweckmäßig, wenn eine besonders wirksame Reinigungsflüssigkeit eingesetzt wird oder mittels hohem Druck Verschmutzungen schnell beseitigt werden können. Es sind jedoch auch Ausgestaltungen des Verfahrens möglich, bei denen die Verweildauer demgegenüber länger ist, insbesondere mindestens 30 Minuten beträgt. Dies kann insbesondere der Fall sein, wenn die Reinigungsflüssigkeit in vernebelter Form eingesetzt wird, so dass es länger braucht, bis ausreichend Reinigu ngsflüssigkeit auf alle verschmutzten Stellen niedergeschlagen ist. Auch den Roboterarm mehrere Stunden über Nacht in der Reinigungskammer unter Einwirkung von umgebendem Nebel zu belassen, kann zweckmäßig sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 und 2 zeigen exemplarische Konfigurationen in einer Gastronomieküche mit jeweils einem Zubereitungsplatz und einem Robotersystem, welches zur Handhabung von Nahrungsmitteln am Zubereitungsplatz ausgebildet ist.
Fig. 3 zeigt ein erstes Ausführungsbeispiel der Erfindung mit durch einen Schlauch gebildetem isoliertem Reinigungsraum.
Fig. 4 zeigt ein zweites Ausführungsbeispiel der Erfindung mit durch einen Schlauch gebildetem isoliertem Reinigungsraum.
Fig. 5A und 5B zeigen ein drittes Ausführungsbeispiel der Erfindung mit durch einen Schlauch gebildetem isoliertem Reinigungsraum.
Fig. 6 zeigt ein viertes Ausführungsbeispiel der Erfindung mit durch einen Schlauch gebildetem isoliertem Reinigungsraum.
Fig. 7 zeigt ein fünftes Ausführungsbeispiel der Erfindung mit durch einen Vorhang geschlossenem Reinigungsraum.
Fig. 8 zeigt ein sechstes Ausführungsbeispiel der Erfindung mit durch einen Vorhang geschlossenem Reinigungsraum.
Fig. 9 zeigt ein siebtes Ausführungsbeispiel der Erfindung mit durch einen Vorhang geschlossenem Reinigungsraum.

### DETAILLIERTE BESCHREIBUNG DER AUSFÜHRUNGSBEISPIELE

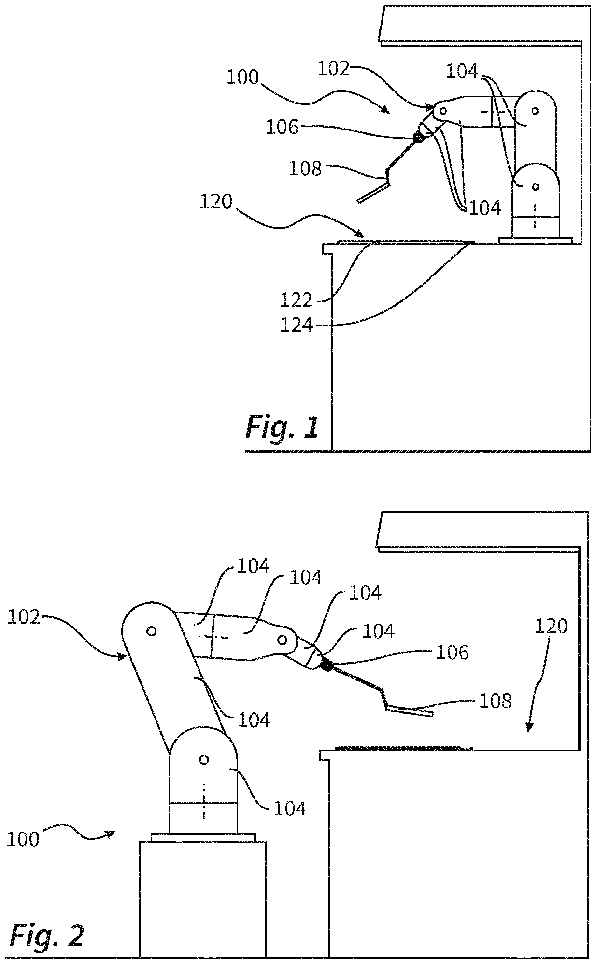

Die Fig. 1 und 2 zeigen exemplarisch mögliche Anordnungen eines Küchenroboters 100 in einer Gastronomieküche, die mit einer Zubereitungsstation 120 versehen ist, vorliegend beispielsweise als Grillstation dargestellt.

Der Küchenroboter 100 beim Ausführungsbeispiel der Fig. 1 ist hinter dem Grillrost 122 der Zubereitungsstation 120 angeordnet, so dass in vorteilhafter Weise ein kooperatives Arbeiten mit einem menschlichen Kollegen möglich ist. Dabei kann der Küchenroboter 100 wie dargestellt auf der Arbeitsfläche oder auch an einer Decke oberhalb der Arbeitsfläche installiert sein. Auch eine zusätzliche lineare Verfahrbarkeit ist hier denkbar.

Der Küchenroboter 100 beim Ausführungsbeispiel der Fig. 2 ist vor der Zubereitungsstation 120 angeordnet. Diese Konfiguration ist von Vorteil, wenn der Arbeitsplatz ausschließlich oder weit überwiegend vom Küchenroboter 100 genutzt wird.

Die dargestellten Küchenroboter 100 weisen eine Basis in Form einer Befestigungsplatte oder eines Sockels auf und verfügen über einen demgegenüber beweglichen Roboterarm 102, dessen Glieder 104 um mehrere Achsen schwenk- und drehbar sind. Ein am distalen Ende mittels einer Wechselkupplung 106 befestigtes Küchenwerkzeug 108 kann daher sehr flexibel im Raum bewegt werden und beispielsweise zum Wenden von Burgerfleisch verwendet werden.

Die verrichteten Tätigkeiten des Küchenroboters 100 gehen mit einer Verschmutzung des Roboterarms 102 einher. Während das Küchenwerkzeug 108 nach Gebrauch zum Zwecke der Reinigung nur abgekoppelt werden und in die Spülmaschine geräumt werden kann, ist der übrige Roboterarm zu schwer, um ihn an anderer Stelle zu reinigen.

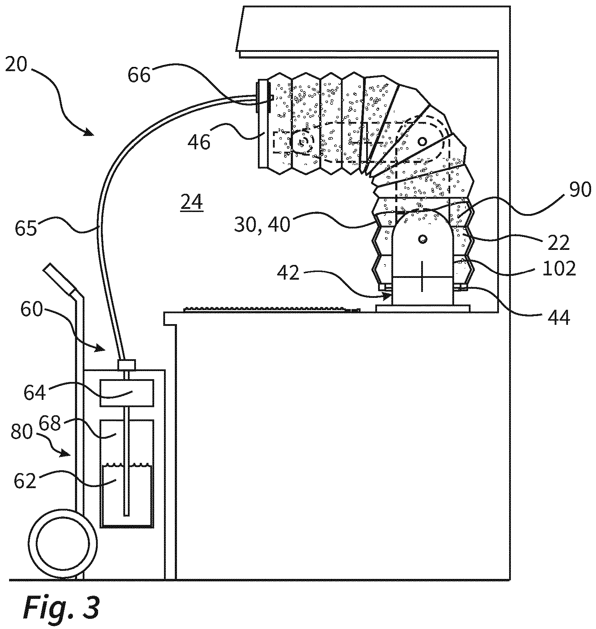

Fig. 3 zeigt ein erstes Ausführungsbeispiel einer Konfiguration mit einem hierfür vorgesehen Reinigungssystem 20. Der Roboterarm 102 wird hier während einer Reinigung gezeigt. Zu deren Zweck ist ein Reinigungsschlauch 40 vom distalen Ende aus über den Roboterarm 102 gezogen worden. Der Reinigungsschlauch 40 ist exemplarisch als Balgschlauch dargestellt. Die Wandung eines solchen Balgschlauchs ist formflexibel und gestattet dadurch eine einfache Krümmung sowie Verkürzung bei Nichtgebrauch.

Am Ende 42 des Reinigungsschlauchs ist eine umlaufende und nach innen weisende Dichtungseinrichtung 44 vorgesehen, die am proximalen Ende des Roboterarms 102 an einer Außenseite des Küchenroboters 100 anliegt. Auf der gegenüberliegenden Seite ist der Reinigungsschlauch 40 stirnseitig weitgehend verschlossen, so dass sich der Roboterarm 102 als Ganzes innerhalb des durch den Reinigungsschlauch 40 abgeschlossenen Reinigungsraums 22 befindet.

Zum Zwecke der Reinigung wird ein flüssiges Reinigungsmedium 62 dem Reinigungsraum 22 zugeführt. Dies geschieht mittels eines Ausbringungssystems 60, welches zu diesem Zweck über einen Tank 68 sowie eine Pumpe 64 verfügt. Der Tank und die Pumpe sind bei der exemplarischen Ausgestaltung der Fig. 3 auf einem mobilen Wagen 80 moniert. Die Pumpe 64 ist über einen als Schlauch ausgebildeten Zufuhrkanal 65 mit einer Austragdüse 66 verbunden, die vorliegend als Einstoff-Druckdüse ausgebildet ist, aber auch als Zweistoffdüse mit Zuführung für einen Gas- oder Dampfmassenstrom ausgebildet sein könnte. Die Austragdüse 66 ist an der Stirnseite 46 des Reinigungsschlauchs 40 vorgesehen und ragt in den Reinigungsraum 22.

Hierdurch kann ein feiner Nebel 90 des Reinigungsmediums 62 auf Oberflächen des Roboterarms 102 aufgebracht werden. Nach anfänglicher oder bei fortlaufender Einbringung des Nebels 90 werden auch schwer zugängliche Oberflächen nach und nach erreicht. Nachdem dies in ausreichendem Maße geschehen ist, kann der Reinigungsschlauch 40 abgenommen werden und die Reinigungsflüssigkeit kann von den Oberflächen mittels eines Lappens aufgenommen werden. Das Reinigungssystem 20 mit dem Wagen 80 und dem Reinigungsschlauch 40 kann anschließend zur Reinigung eines weiteren Roboters verwendet werden oder platzsparend verräumt werden.

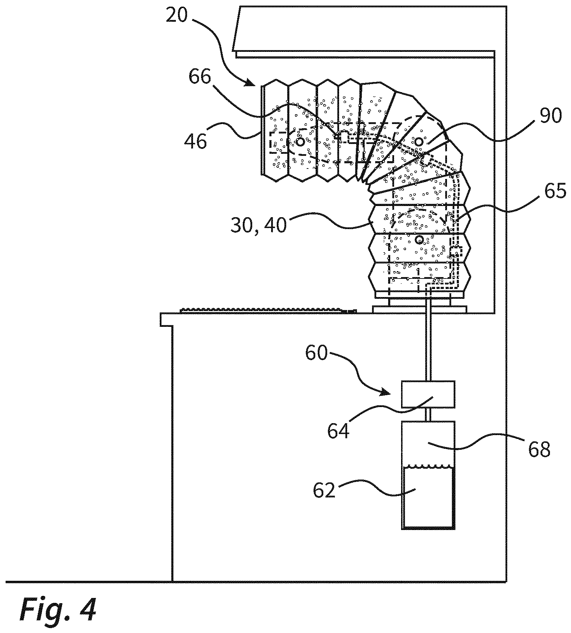

Das Ausführungsbeispiel der Fig. 4 unterscheidet sich vom vorangegangenen nur dadurch, dass das Ausbringungssystems 60 als in den Roboter integriertes Ausbringungssystem 60 ausgebildet ist. Dies bedeutet, dass die Austragdüse 66 üblicherweise auch während des Kochbetriebs installiert bleibt. Sie ist zu diesem Zweck an einem der Glieder 104 des Roboterarms 102 vorgesehen. Auch der Zufuhrkanal 65 sowie die anderen flüssigkeitsführenden Komponenten sind fest installiert.

Der Vorbereitung des Reinigungsvorgangs erfordert daher nur die Anbringung des in diesem Falle an der Stirnseite 46 geschlossenen Reinigungsschlauchs 40 und geht daher mit geringem Aufwand einher. Nach Anbringung wird das Reinigungsmedium 62 über die Austragdüse 66 in Nebelform oder Sprühform abgegeben. Die Austragdüse 66 kann auch bei diesem Ausführungsbeispiel wie auch bei den nachfolgenden Ausführungsbeispielen alternativ als Einstoff-Düse oder Zweistoff-Düse ausgebildet sein.

Dass der Zufuhrkanal 65 in Fig. 4 als extern am Roboterarm 102 angebrachter Schlauch ausgebildet ist, ist lediglich zum besseren Verständnis der Funktion vorgesehen. In der Praxis wird eine Integration des Zufuhrkanals in den Roboterarm bevorzugt, da dieser die Reinigung des Roboterarms 102 ansonsten erschweren würde.

Die Anbringung der Austragdüse 66 am Roboterarm 102 ermöglicht weiterhin einen Betriebsmodus, in dem der Roboterarm 102 zur Reinigung des übrigen Arbeitsplatzes genutzt wird, indem er bei nicht angebrachtem Reinigungsschlauch 40 die umgebenden Flächen des Arbeitsplatzes mit Reinigungsmedium 62 benetzt.

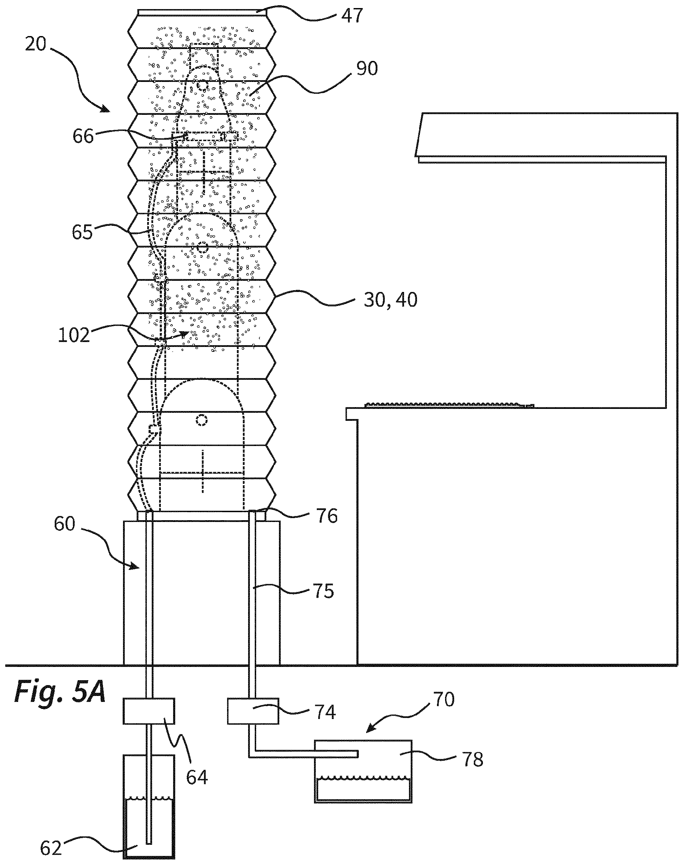

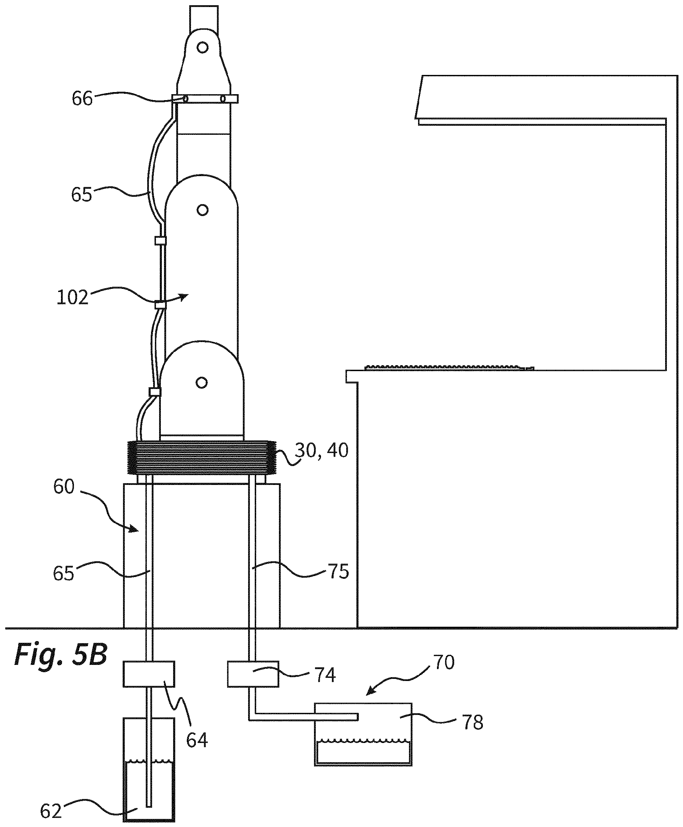

Das Ausführungsbeispiel der Fig. 5A und 5B betrifft die Konfiguration des Küchenroboters 100 entsprechend der eingangs erörterten Fig. 2.

Übereinstimmend mit der Gestaltung der Fig. 4 ein Reinigungsschlauch 40 vorgesehen, wobei dieser bei einer Variante des Ausführungsbeispiels als fest am Küchenroboter 100 verbleibendes Teil vorgesehen sein kann (siehe Fig. 5B). Der Reinigungsschlauch 40 umgibt den Roboterarm 102 und weist am oberen Ende eine geschlossene Stirnseite 46 auf. Am unteren Ende dichtet der Reinigungsschlauch 40 mit dem Sockel des Roboters 100 ab, wobei es nicht zwingend auf eine vollständige Abdichtung ankommt. Es reicht üblicherweise, wenn hier keine großen Flüssigkeitsmengen und insbesondere keine großen Mengen vernebelter Flüssigkeit austreten.

Wie bei der Gestaltung der Fig. 4 ist das Ausbringungssystem 60 als fest installiertes Ausbringungssystem 60 ausgebildet. Seine Austragdüsen 66 sind an einem distalen Ende des Roboterarms 102 vorgesehen, wobei der Zufuhrkanal 65 wiederum als externer Schlauch dargestellt ist, aber auch als in den Roboterarm integrierter Kanal ausgebildet sein könnte.

Abweichend von der Gestaltung der Fig. 4 ist zusätzlich zum Ausbringungssystems 60 auch ein Absaugungssystem 70 vorgesehen, welches über eine Ansaugöffnung 76 am unteren Ende des Reinigungsraums 22 verfügt, an dem mittels einer zweiten Pumpe 74 ein Unterdruck erzeugt wird und vernebelte Flüssigkeit somit in einen Restflüssigkeitstank 78 abtransportiert werden kann. Die Pumpe 74 kann darüber hinaus bei umgekehrter Pumprichtung auch verwendet werden, um die Wolke aus Nebel 90 wieder nach oben zu bewegen.

Fig. 5B zeigt, dass bei einer besonderen Ausgestaltung auch ein Verbleib des Reinigungsschlauchs 40 am Roboter 100 denkbar ist. Hierzu wird vorliegend nach Wegnahme einer endseitig am Reinigungsschlauch angebrachten Verschlussplatte 47 der als Balgschlauch ausgebildete Reinigungsschlauch 40 gestaucht, so dass er den Regelbetrieb des Küchenroboters 100 nicht stört.

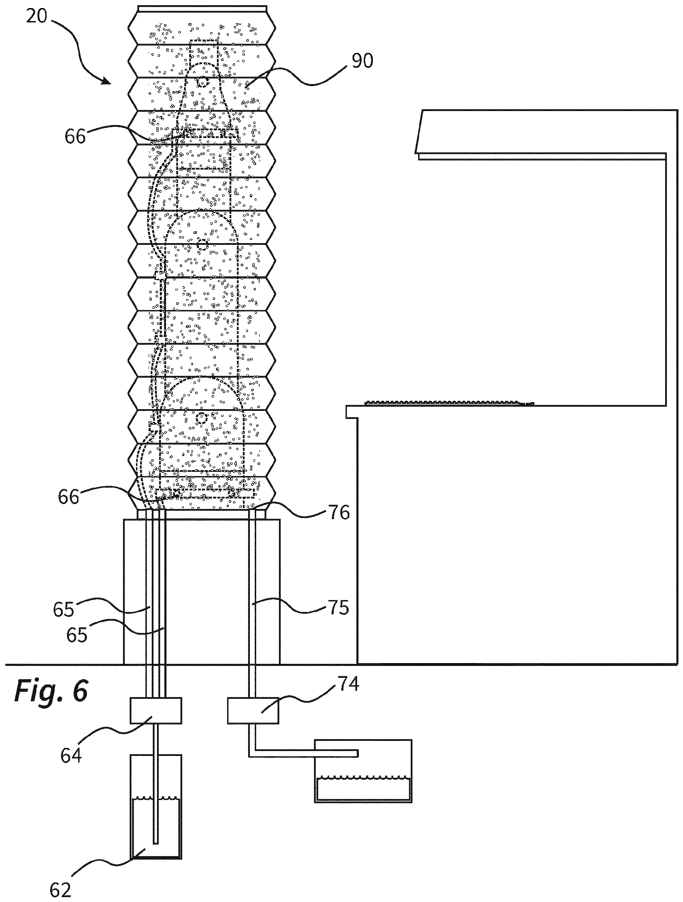

Fig. 6 zeigt eine alternative Gestaltung, deren Unterschied zur Gestaltung der Fig. 5A, 5B darin liegt, dass sowohl am unteren proximalen Ende als auch am oberen distalen Ende des Roboterarms 102 Austragdüsen 66 angebracht werden, die es so gemeinsam gestatten, den Nebel 90 noch besser im gesamten Reinigungsraum 22 zu verteilen. Insbesondere kann auch durch alternierendes Austragen des Reinigungsmediums in Nebelform aus den unteren Austragdüsen 66 und den oberen Austragdüsen 66 eine Bewegung der Wolke aus Nebel 90 verursacht werden, durch die sich besonders schnell ein Niederschlag auf allen zu reinigenden Flächen einstellt.

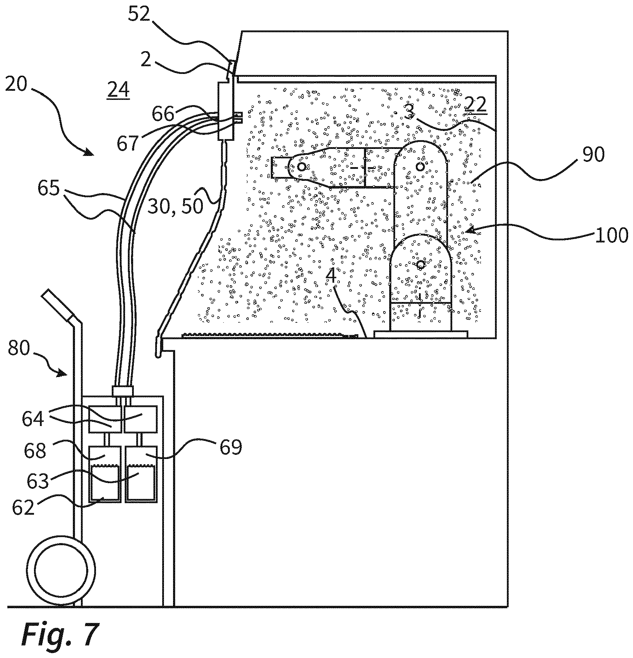

Das Ausführungsbeispiel der Fig. 7 basiert wiederum auf der Roboterkonfiguration der Fig. 1. Ähnlich wie bei der Gestaltung der Fig. 3 ist ein Wagen 80 vorgesehen, der das flüssige Reinigungsmedium 62 in einem Tank 68 sowie eine zugehörige Pumpe 64 umfasst. Zusätzlich ist jedoch eine Spülflüssigkeit 63 in einem separaten Tank 69 vorgesehen. Durch zwei Zufuhrkanäle 65 in Schlauchform können das Reinigungsmedium 62 und die Spülflüssigkeit 63 zu separaten Austragdüsen 66, 67 gefördert werden.

Die Austragdüsen 66, 67 sind bei diesem Ausführungsbeispiel jedoch nicht in einem Reinigungsschlauch vorgesehen, sondern stattdessen eine formflexible Isolationsplane 50, also eine in sich verformbare Fläche in Art eines Vorhangs, wobei es sich vorliegend um einen Lamellenvorhang handelt. Die Isolationsplane 50 schließt den Grillbereich der Arbeitsstation nach vorne hin ab, während der Bereich zu den anderen Seiten durch Wandungen 2, 3, 4 der Küche bzw. des Arbeitsplatzes begrenzt ist. Somit entsteht ein Reinigungsraum 22, der gegenüber der Küchenumgebung 24 verschlossen ist. Am oberen Ende ist die Isolationsplane durch ein magnetisch wirkendes Befestigungssystem 52 in Form einer Magnetleiste an einer Dunstabzugshaube des Arbeitsplatzes befestigt. Am unteren Ende hängt die Isolationsplane 50 frei auf den Arbeitsplatz. Da es auf eine besondere Dichtigkeit nicht ankommt, kann hierauf eine weitergehende Befestigung verzichtet werden.

In der oben beschriebenen Weise wird in den im Wesentlichen isolierten Reinigungsraum 22 Reinigungsmedium-Nebel 90 durch die Austragdüse 66 ausgebracht. Nach einer Einwirkzeit erfolgt dann eine Spülung durch Spülflüssigkeit63, die durch die Austragdüse 67 eingesprüht wird. Die Spülflüssigkeit entfernt das Reinigungsmedium von den Oberflächen des Roboterarms 102, derzu diesem Zweck dabei auch bewegt werden kann. Durch einen Abfluss 124 in der Arbeitsfläche kann die Spülflüssigkeit abfließen.

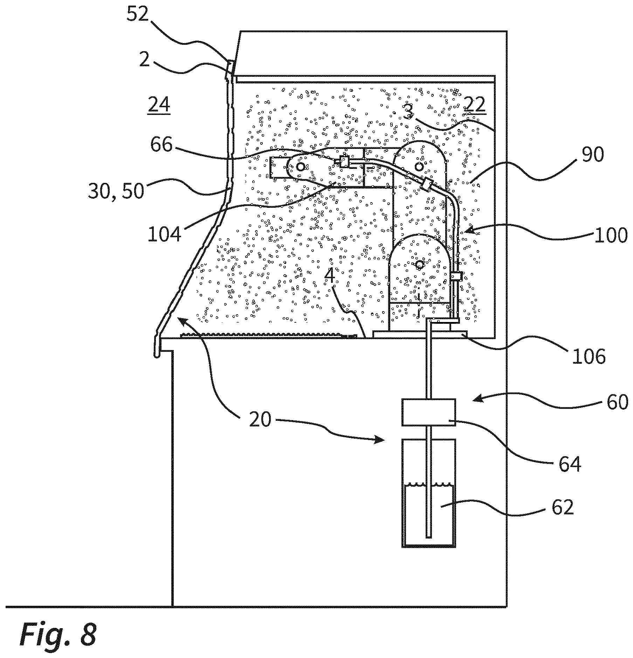

Das Ausführungsbeispiel der Fig. 8 unterscheidet sich von dem der Fig. 7 dadurch, dass entsprechend der Ausgestaltung der Fig. 4 das Ausbringungssystem 60 als fest installiertes System vorgesehen ist. Die Austragdüse 66 ist wiederum an einem Glied 104 des Roboterarms 102 vorgesehen.

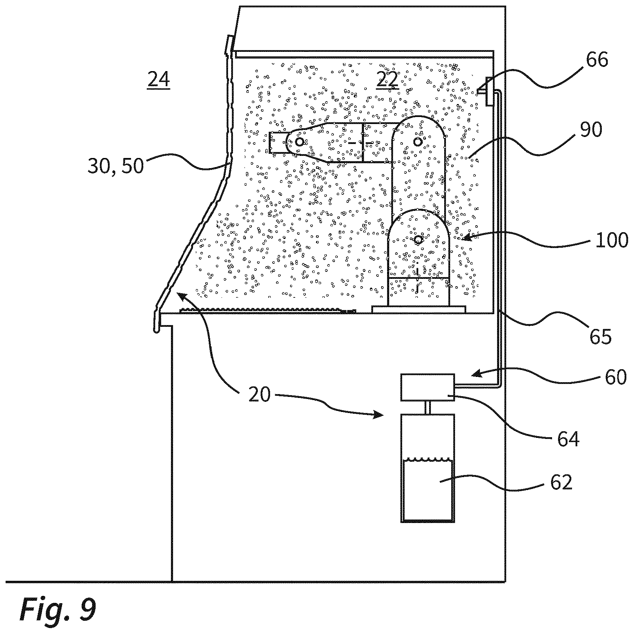

Das Ausführungsbeispiel der Fig. 9 ist demgegenüber nochmals geändert, da hier das Ausbringungssystem 60 zwar auch als fest installiertes System vorgesehen ist, die Austragdüse 66 jedoch abseits des Roboterarms 102 installiert ist.

## Patentansprüche

1. Gastronomieküche (10) mit mindestens einem Zubereitungsplatz oder Verarbeitungsplatz für Nahrungsmittel und mit den folgenden Merkmalen:
a. die Gastronomieküche (10) weist mindestens ein Küchenrobotersystem mit einem Küchenroboter (100) und mit einem Reinigungssystem (20) auf,
b. der Küchenroboter (100) weist mindestens einen Roboterarm (102) auf, der über eine Mehrzahl von Gliedern (104) verfügt, die jeweils über Gelenke oder Führungen aneinander angebunden und gegeneinander beweglich sind,
c. das Reinigungssystem (20) bildet einen Reinigungsraum (22) zur zumindest abschnittsweisen Aufnahme des Küchenroboters (100),
d. der Reinigungsraum (22) ist zumindest abschnittsweise durch eine formflexible Wandung (30) des Reinigungssystems (20) begrenzt, und
e. das Reinigungssystem (20) umfasst ein Ausbringungssystem (60) für ein Reinigungsmedium (62), welches über mindestens eine Austragdüse (66) verfügt, mittels derer das Reinigungsmedium (62) in den Reinigungsraum (22) eingebracht werden kann.

2. Gastronomieküche (10) nach Anspruch 1 mit den folgenden zusätzlichen Merkmalen:
a. das Reinigungssystem (20) weist einen Reinigungsschlauch (40) auf, der zumindest teilweise die formflexible Wandung (30) bildet und den Reinigungsraum (22) begrenzt, und
b. der Reinigungsschlauch (40) verfügt über mindestens ein offenes Ende (42), so dass er mindestens über einen Greifer oder Roboterarm (102) des Küchenroboters (100) oder über den gesamten Küchenroboter (100) gezogen werden kann und diesen Greifer oder Roboterarm (102) oder den gesamten Küchenroboter damit von einer Umgebung (24) isolieren kann.

3. Gastronomieküche (10) nach Anspruch 2 mit dem folgenden zusätzlichen Merkmal:
a. an mindestens einem offenen Ende (42) des Reinigungsschlauchs (40) ist eine Dichtungseinrichtung (44) vorgesehen,
insbesondere mit dem folgenden zusätzlichen Merkmal:
b. die Dichtungseinrichtung (44) umfasst eine umlaufende nach innen oder in Richtung des offenen Endes (42) weisende und vorzugsweise elastisch tangential dehnbare und/oder verformbare Dichtfläche, die zur Anlage an einer Gegenfläche am Küchenroboter (100) vorgesehen ist.

4. Gastronomieküche (10) nach Anspruch 1 mit dem folgenden zusätzlichen Merkmal:
a. das Reinigungssystem (20) weist eine verformbare Isolationsplane (50) auf, die zur Befestigung an einer Wandung (2, 3, 4) innerhalb einer Küche vorgesehen ist und die zusammen mit diesen Wandungen (2, 3, 4) den Reinigungsraum (22) bildet und gegenüber einer Umgebung isoliert.

5. Gastronomieküche (10) nach Anspruch 4 mit dem folgenden zusätzlichen Merkmal:
a. die Isolationsplane (50) ist zur lösbaren Befestigung an einer starren Wandung (2) des Reinigungssystems ausgebildet, insbesondere durch ein magnetisch wirkendes Befestigungssystem (52).

6. Gastronomieküche (10) nach einem der vorstehenden Ansprüche mit dem folgenden zusätzlichen Merkmal:
a. mindestens eine Austragdüse (66) ist in die formflexible Wandung (30) des Reinigungssystems integriert.

7. Gastronomieküche (10) nach einem der vorstehenden Ansprüche mit dem folgenden zusätzlichen Merkmal:
a. mindestens eine Austragdüse (66) ist ortsfest am Küchenroboter (100) befestigt, insbesondere an einem beweglichen Glied (104) des Roboterarms (102),
insbesondere mit dem folgenden zusätzlichen Merkmal:
b. im Roboterarm (102) ist mindestens eine Zuleitung zur Austragdüse fest integriert.

8. Gastronomieküche (10) nach einem der vorstehenden Ansprüche mit dem folgenden zusätzlichen Merkmal:
a. das Ausbringungssystem (60) ist zur Ausbringung unterschiedlicher Reinigungsmedien (62) und/oder mindestens eines Reinigungsmediums (62) sowie mindestens einer Spülflüssigkeit (63) ausgebildet,
insbesondere mit mindestens einem derfolgenden zusätzlichen Merkmalen:
b. das Ausbringungssystem (60) verfügt über mehrere Flüssigkeitsspeicher (61) zur Lagerung von unterschiedlichen Reinigungsmedien (62) und/oder der Spülflüssigkeit (63), und/oder
c. das Ausbringungssystem (60) verfügt über mehrere Austragdüsen (66) zur Ausbringung von unterschiedlichen Reinigungsmedien und/oder der Spülflüssigkeit.

9. Gastronomieküche (10) nach einem der vorstehenden Ansprüche mit dem folgenden zusätzlichen Merkmal:
a. mindestens eine Austragdüse (66) ist als Nebeldüse ausgebildet, die unter Zufuhr von Luft oder ohne zusätzliche Luftzufuhr zur Erzeugung eines Nebels mit einer mittleren Tröpfchengröße von X ausgebildet ist.
insbesondere mit dem folgenden zusätzlichen Merkmal:
b. das Ausbringungssystem (60) verfügt über mehrere voneinander beabstandete Austragdüsen (66), von denen mindestens eine erste Austragdüse zur Erzeugung des Nebels ausgebildet ist und von denen mindestens eine zweite Austragdüse (66) derart angeordnet oder ausgebildet ist, dass sie durch Austrag von Gas oder Nebel die Ausbreitung des Nebels der ersten Austragdüse (66) beeinflussen kann.

10. Gastronomieküche (10) nach einem der vorstehenden Ansprüche mit dem folgenden zusätzlichen Merkmal:
a. das Reinigungssystem (20) umfasstein Absaugungssystem (70) zur Entfernung von flüssigen und/oder in Nebelform vorliegenden Flüssigkeitsresten des Reinigungsmediums und/oder der Spülflüssigkeit, welches über mindestens eine Ansaugöffnung (76) verfügt.

11. Gastronomieküche (10) nach einem der vorstehenden Ansprüche mit dem folgenden zusätzlichen Merkmal:
a. der Roboterarm (102) ist mindestens als 4-Achs-Roboterarm und vorzugsweise als 6-Achs-Roboterarm (102) ausgebildet.

12. Gastronomieküche (10) nach einem der vorstehenden Ansprüche mit den folgenden zusätzlichen Merkmalen:
a. der Küchenroboter (100) ist zur stationären Anordnung ausgebildet, und
insbesondere mit mindestens einem der folgenden zusätzlichen Merkmale:
b. das Reinigungssystem (20) ist zumindest teilweise zur fallweisen Anbringung am Küchenroboter (100) ausgebildet und/oder
c. das Reinigungssystem (20) ist zumindest teilweise zum festen Verbleib am Küchenroboter (100) ausgebildet.

13. Verfahren zum Reinigen eines in der Gastronomie eingesetzten Küchenroboters (100) gemäß dem Merkmal b) des Anspruchs 1 mit einem Reinigungssystem (20) gemäß den Merkmalen c), d) und e) des Anspruchs 1 und vorzugsweise mit zusätzlichen Merkmalen der Ansprüche 2 bis 10, wobei das Verfahren folgende Schritte aufweist:
a. zum Zwecke der Reinigung wird der Roboterarm (102) oder ein Greifer des Küchenroboters (100) oder der gesamte Küchenroboter (100) in dem Reinigungsraum (22) gegenüber einer Umgebung (24) isoliert, und
b. es wird mittels der mindestens einer Austragdüse (66) das Reinigungsmedium (62) in den Reinigungsraum (22) eingebracht und auf Oberflächen des Greifers, des Roboterarms (102) oder des Küchenroboters (100) aufgebracht.

14. Verfahren nach Anspruch 13 mit dem folgenden zusätzlichen Schritt:
a. es wird nach dem Reinigungsmedium (62) eine vom Reinigungsmedium abweichende Spülflüssigkeit (63) in den Reinigungsraum eingebracht.

## Claims

1. Gastronomy kitchen (10) having at least one preparation workspace or processing workspace for food, and having the following features:
a. the gastronomy kitchen (10) has at least one kitchen robot system having a kitchen robot (100) and having a cleaning system (20);
b. the kitchen robot (100) has at least one robotic arm (102) which possesses a plurality of limbs (104) which are in each case linked to one another and movable relative to one another by way of joints or guides;
c. the cleaning system (20) forms a cleaning space (22) for receiving the kitchen robot (100) at least in portions;
d. the cleaning space (22) is at least in portions delimited by a dimensionally flexible wall (30) of the cleaning system (20); and
e. the cleaning system (20) comprises a delivery system (60) for a cleaning medium (62), which possesses at least one delivery nozzle (66) by means of which the cleaning medium (62) can be introduced into the cleaning space (22).

2. Gastronomy kitchen (10) according to Claim 1, having the following additional features:
a. the cleaning system (20) has a cleaning hose (40) which at least partially forms the dimensionally flexible wall (30) and delimits the cleaning space (22); and
b. the cleaning hose (40) possesses at least one open end (42) such that said cleaning hose (40) can be pulled over at least one gripper or robotic arm (102) of the kitchen robot (100) or over the entire kitchen robot (100) and thus can insulate this gripper or robotic arm (102) or the entire kitchen robot from an environment (24).

3. Gastronomy kitchen (10) according to Claim 2, having the following additional feature:
a. a sealing installation (44) is provided on at least one open end (42) of the cleaning hose (40);
in particular having the following additional feature:
b. the sealing installation (44) comprises an encircling sealing face which points inwards or in the direction of the open end (42) and is preferably able to be elastically elongated and/or deformed in a tangential manner and is provided for bearing on a mating face on the kitchen robot (100).

4. Gastronomy kitchen (10) according to Claim 1, having the following additional feature:
a. the cleaning system (20) has a deformable insulation tarpaulin (50) which is provided for fastening to a wall (2, 3, 4) within a kitchen and which, conjointly with these walls (2, 3, 4), forms the cleaning space (22) and insulates the latter in relation to an environment.

5. Gastronomy kitchen (10) according to Claim 4, having the following additional feature:
a. the insulation tarpaulin (50) is configured to be releasably fastened to a rigid wall (2) of the cleaning systems, in particular by way of a magnetically acting fastening system (52).

6. Gastronomy kitchen (10) according to one of the preceding claims, having the following additional feature:
a. at least one delivery nozzle (66) is integrated in the dimensionally flexible wall (30) of the cleaning system.

7. Gastronomy kitchen (10) according to one of the preceding claims, having the following additional feature:
a. at least one delivery nozzle (66) is fastened so as to be locationally fixed to the kitchen robot (100), in particular to a movable limb (104) of the robotic arm (102);
in particular having the following additional feature:
b. at least one supply line to the delivery nozzle is fixedly integrated in the robotic arm (102).

8. Gastronomy kitchen (10) according to one of the preceding claims, having the following additional feature:
a. the delivery system (60) is configured to deliver different cleaning media (62) and/or at least one cleaning medium (62) as well as at least one rinsing liquid (63);
in particular having at least one of the following additional features:
b. the delivery system (60) possesses a plurality of liquid storage units (61) for storing different cleaning media (62) and/or the rinsing liquid (63); and/or
c. the delivery system (60) possesses a plurality of delivery nozzles (66) for delivering different cleaning media and/or the rinsing liquid.

9. Gastronomy kitchen (10) according to one of the preceding claims, having the following additional feature:
a. at least one delivery nozzle (66) is configured as a misting nozzle which, with the supply of air or without an additional supply of air, is configured to generate a mist with a mean droplet size of X;
in particular having the following additional feature:
b. the delivery system (60) possesses a plurality of mutually spaced-apart delivery nozzles (66) of which at least one first delivery nozzle is configured to generate the mist, and of which at least one second delivery nozzle (66) is disposed or configured in such a manner that said at least one second delivery nozzle (66) by delivering gas or mist can influence the propagation of the mist of the first delivery nozzle (66).

10. Gastronomy kitchen (10) according to one of the preceding claims, having the following additional feature:
a. the cleaning system (20) comprises an extraction system (70) for removing liquid remnants of the cleaning medium and/or of the rinsing liquid that are liquid and/or present in the form of a mist, said extraction system (70) possessing at least one suction opening (76).

11. Gastronomy kitchen (10) according to one of the preceding claims, having the following additional feature:
a. the robotic arm (102) is configured at least as a 4-axis robotic arm and preferably as a 6-axis robotic arm (102).

12. Gastronomy kitchen (10) according to one of the preceding claims, having the following additional features:
a. the kitchen robot (100) is configured for stationary disposal; and
in particular having at least one of the following additional features:
b. the cleaning system (20) is at least partially configured to be occasionally attached to the kitchen robot (100); and/or
c. the cleaning system (20) is at least partially configured to fixedly remain on the kitchen robot (100).

13. Method for cleaning a kitchen robot (100) used in gastronomy, according to the feature b) of Claim 1, having a cleaning system (20) according to the features c), d) and e) of Claim 1 and preferably having additional features of Claims 2 to 10, wherein the method comprises the following steps:
a. for the purpose of cleaning, the robotic arm (102) or a gripper of the kitchen robot (100), or the entire kitchen robot (100) in the cleaning space (22) is insulated in relation to an environment (24); and
b. the cleaning medium (62) by means of the at least one delivery nozzle (66) is introduced into the cleaning space (22) and applied to surfaces of the gripper, of the robotic arm (102) or of the kitchen robot (100).

14. Method according to Claim 13, comprising the following additional step:
a. after the cleaning medium (62), a rinsing liquid (63) different from the cleaning medium, is introduced into the cleaning space.

## Revendications

1. Cuisine de restaurant (10) avec au moins un poste de préparation ou un poste de transformation pour des aliments et avec les caractéristiques suivantes :
a. la cuisine de restaurant (10) présente au moins un système de robot de cuisine avec un robot de cuisine (100) et avec un système de nettoyage (20),
b. le robot de cuisine (100) présente au moins un bras de robot (102) qui dispose d'une pluralité de membres (104) qui sont respectivement reliés les uns aux autres par l'intermédiaire d'articulations ou de guides et qui sont mobiles les uns par rapport aux autres,
c. le système de nettoyage (20) forme un espace de nettoyage (22) pour la réception au moins par sections du robot de cuisine (100),
d. l'espace de nettoyage (22) est délimité au moins par sections par une paroi de forme flexible (30) du système de nettoyage (20), et
e. le système de nettoyage (20) comprend un système de distribution (60) pour un agent de nettoyage (62), qui dispose d'au moins une buse de déchargement (66), au moyen de laquelle l'agent de nettoyage (62) peut être introduit dans l'espace de nettoyage (22).

2. Cuisine de restaurant (10) selon la revendication 1 avec les caractéristiques supplémentaires suivantes :
a. le système de nettoyage (20) présente un tuyau de nettoyage (40) qui forme au moins en partie la paroi de forme flexible (30) et qui délimite l'espace de nettoyage (22), et
b. le tuyau de nettoyage (40) dispose d'au moins une extrémité ouverte (42), de telle sorte qu'il peut être enfilé au moins sur un preneur ou un bras de robot (102) du robot de cuisine (100) ou sur l'ensemble du robot de cuisine (100) et peut ainsi isoler ce preneur ou ce bras de robot (102) ou l'ensemble du robot de cuisine d'un environnement (24).

3. Cuisine de restaurant (10) selon la revendication 2 avec la caractéristique supplémentaire suivante :
a. un dispositif d'étanchéité (44) est prévu à au moins une extrémité ouverte (42) du tuyau de nettoyage (40),
notamment avec la caractéristique supplémentaire suivante :
b. le dispositif d'étanchéité (44) comprend une surface d'étanchéité périphérique orientée vers l'intérieur ou en direction de l'extrémité ouverte (42) et de préférence élastiquement extensible et/ou déformable tangentiellement, qui est prévue pour s'appliquer contre une contre-surface sur le robot de cuisine (100).

4. Cuisine de restaurant (10) selon la revendication 1 avec la caractéristique supplémentaire suivante :
a. le système de nettoyage (20) présente une bâche isolante déformable (50) qui est prévue pour être fixée à une paroi (2, 3, 4) à l'intérieur d'une cuisine et qui, conjointement avec ces parois (2, 3, 4), forme l'espace de nettoyage (22) et l'isole d'un environnement.

5. Cuisine de restaurant (10) selon la revendication 4 avec la caractéristique supplémentaire suivante :
a. la bâche isolante (50) est configurée pour être fixée de manière amovible à une paroi rigide (2) du système de nettoyage, notamment par un système de fixation à effet magnétique (52).

6. Cuisine de restaurant (10) selon l'une quelconque des revendications précédentes avec la caractéristique supplémentaire suivante :
a. au moins une buse de déchargement (66) est intégrée dans la paroi de forme flexible (30) du système de nettoyage.

7. Cuisine de restaurant (10) selon l'une quelconque des revendications précédentes avec la caractéristique supplémentaire suivante :
a. au moins une buse de déchargement (66) est fixée de manière stationnaire au robot de cuisine (100), notamment à un membre mobile (104) du bras de robot (102),
notamment avec la caractéristique supplémentaire suivante :
b. au moins une conduite d'alimentation pour la buse de déchargement est intégrée de manière fixe dans le bras du robot (102).

8. Cuisine de restaurant (10) selon l'une quelconque des revendications précédentes avec la caractéristique supplémentaire suivante :
a. le système de distribution (60) est configuré pour distribuer différents agents de nettoyage (62) et/ou au moins un agent de nettoyage (62) ainsi qu'au moins un fluide de rinçage (63),
notamment avec au moins une des caractéristiques supplémentaires suivantes :
b. le système de distribution (60) dispose de plusieurs réservoirs de fluide (61) pour le stockage de différents agents de nettoyage (62) et/ou du fluide de rinçage (63), et/ou
c. le système de distribution (60) dispose de plusieurs buses de déchargement (66) pour la distribution de différents agents de nettoyage et/ou du fluide de rinçage.

9. Cuisine de restaurant (10) selon l'une quelconque des revendications précédentes avec la caractéristique supplémentaire suivante :
a. au moins une buse de déchargement (66) est configurée sous forme de buse à brouillard qui, avec apport d'air ou sans apport d'air supplémentaire, est configurée pour produire un brouillard avec une taille moyenne de gouttes de X,
notamment avec la caractéristique supplémentaire suivante :
b. le système de distribution (60) dispose de plusieurs buses de déchargement (66) espacées les unes des autres, dont au moins une première buse de déchargement est configurée pour produire le brouillard et dont au moins une deuxième buse de déchargement (66) est agencée ou configurée de telle sorte qu'elle peut influencer la propagation du brouillard de la première buse de déchargement (66) par déchargement de gaz ou de brouillard.

10. Cuisine de restaurant (10) selon l'une quelconque des revendications précédentes avec la caractéristique supplémentaire suivante :
a. le système de nettoyage (20) comprend un système d'aspiration (70) pour l'élimination des résidus de fluide fluides et/ou présents sous forme de brouillard de l'agent de nettoyage et/ou du fluide de rinçage, qui dispose d'au moins une ouverture d'aspiration (76).

11. Cuisine de restaurant (10) selon l'une quelconque des revendications précédentes avec la caractéristique supplémentaire suivante :
a. le bras de robot (102) est configuré au moins sous forme de bras de robot à 4 axes et de préférence sous forme de bras de robot à 6 axes (102).

12. Cuisine de restaurant (10) selon l'une quelconque des revendications précédentes avec les caractéristiques supplémentaires suivantes :
a. le robot de cuisine (100) est configuré pour un agencement stationnaire, et notamment avec au moins une des caractéristiques supplémentaires suivantes :
b. le système de nettoyage (20) est configuré au moins en partie pour être monté au cas par cas sur le robot de cuisine (100), et/ou
c. le système de nettoyage (20) est configuré au moins en partie pour rester fixe sur le robot de cuisine (100).

13. Procédé de nettoyage d'un robot de cuisine (100) utilisé en restaurant selon la caractéristique b) de la revendication 1 avec un système de nettoyage (20) selon les caractéristiques c), d) et e) de la revendication 1 et de préférence avec des caractéristiques supplémentaires des revendications 2 à 10, le procédé présentant les étapes suivantes :
a. aux fins du nettoyage, le bras de robot (102) ou un preneur du robot de cuisine (100) ou l'ensemble du robot de cuisine (100) est isolé d'un environnement (24) dans l'espace de nettoyage (22), et
b. l'agent de nettoyage (62) est introduit dans l'espace de nettoyage (22) au moyen de l'au moins une buse de déchargement (66) et appliqué sur des surfaces du preneur, du bras de robot (102) ou du robot de cuisine (100).

14. Procédé selon la revendication 13 avec l'étape supplémentaire suivante :
a. un fluide de rinçage (63) différent de l'agent de nettoyage est introduit dans l'espace de nettoyage après l'agent de nettoyage (62).
